# EUROPÄISCHE PATENTSCHRIFT

(11) **EP 1 980 780 B1**
(45) Veröffentlichungstag und Bekanntmachung des Hinweises auf die Patenterteilung: **04.11.2009**
(21) Anmeldenummer: 08002992.9
(22) Anmeldetag: 19.02.2008
(51) Int. Cl.: F16L 21/02

(54) **Dichtmuffe für einen Rohrverbinder**
Sealing sleeve for a pipe connector
Manchon d'étanchéité pour un raccordement de tuyaux

(30) Priorität: 11.04.2007 DE 102007017157
(43) Veröffentlichungstag der Anmeldung: 15.10.2008
(73) Patentinhaber: NORMA Germany GmbH, 63477 Maintal (DE)
(72) Erfinder: Krüger, Manfred, 63654 Büdingen (DE); Saalwächter, Thomas, 63110 Rodgau (DE)
(74) Vertreter: Knoblauch, Andreas

(56) Entgegenhaltungen:
- EP-A- 1 564 247
- EP-A- 1 655 332
- AT-B- 354 197
- DE-A1- 2 603 393
- DE-A1- 3 621 870
- DE-B- 1 160 248
- DE-U1- 29 718 867
- GB-A- 2 381 050
- US-A1- 2004 183 304

## Beschreibung

Die Erfindung betrifft eine Dichtmuffe für einen Rohrverbinder mit einem umlaufenden Korpus gemäß Anspruch 1.,

In DE 26 03 393 A1 ist ein Verfahren zum Herstellen eines Kunststoffrohrverbinders offenbart, wobei der Rohrverbinder ein vorgeformtes ringförmiges Hauptteil aufweist, in das ein zweites ringförmiges Bauteil eingespritzt wird. Das zweite Bauteil bedeckt dabei bis auf den Bereich einer ringförmigen Anschlagrippe die radiale Innenseite des Hauptteils. Das Hauptteil ist dabei aus einem relativ steifen Material wie beispielsweise Polyvinylchlorid oder Polypropylen hergestellt, während das zweite Bauteil aus einem weich gestellten Polyvinylchlorid hergestellt werden kann. Das erste Hauptteil bildet also eine Tragzone, während das zweite Bauteil zwei Dichtzonen bildet. Dabei wird das zweite Bauteil durch das erste Hauptteil abgedeckt, also über die gesamte axiale Erstreckung gestützt.

Aus DE 11 60 248 B ist eine Muffenverbindung für Kunststoffrohre bekannt, wobei eine Muffe eine Tragzone aufweist, die zwei Dichtzonen radial umgibt. Zwischen den zwei Dichtzonen ist ein Distanzkörper vorgesehen, der den axialen Abstand zwischen den Dichtzonen festlegt und ein Verkanten von Kunststoffrohren innerhalb der Muffenverbindung verhindern soll. Diese Muffenverbindung wird also aus der Tragzone, zwei Dichtzonen und einem Distanzkörper gebildet.

DE 297 18 867 U1 offenbart eine Rohrkupplung, die eine Tragzone mit zwei Tragarmen aufweist, wobei zwei Dichtzonen vorgesehen sind. Auch bei dieser Rohrkupplung werden die Dichtzonen axial von der Tragzone überdeckt.

Eine weitere Dichtmuffe wird beispielsweise in einem Rohrverbinder verwendet, der unter der Bezeichnung "NORMACONNECT Rapid" von der Rasmussen GmbH, Maintal, Deutschland, angeboten wird.

Bei der stirnseitigen Verbindung von Rohren wird ein Rohrverbinder verwendet, in den von beiden Stirnseiten her jeweils das Ende eines Rohres eingeschoben wird. Dabei legt sich die Dichtlippe an den Umfang des jeweiligen Rohrendes an. Wenn dann der Rohrverbinder gespannt wird, wird die Dichtlippe auf den Umfang der jeweiligen Rohrenden gepresst und dichtet somit die Verbindung zwischen den beiden Rohren ab. Um diese Spannkraft aufzubringen, kann der Verbinder einen schellenartigen Mantel aufweisen, in den die Dichtmuffe eingelegt ist.

Insbesondere bei grösseren Nenndurchmessern weist ein derartiger Rohrverbinder ein gewisses Gewicht auf.

Der Erfindung liegt die Aufgabe zugrunde, Gewicht einzusparen.

Diese Aufgabe wird bei einer Dichtmuffe der eingangs genannten Art dadurch gelöst, dass die Dichtzonen an axialen Enden der Tragzone angeordnet sind, ein Übergang zwischen der Tragzone und mindestens einer Dichtzone unter einem Winkel von < 90° zur Umfangswand verläuft, von der der Übergang ausgeht, und der Vorsprung eine Ausnehmung aufweist.

Bei einer derartigen Ausgestaltung kann man nun durch die Wahl von unterschiedlichen Materialien auf die speziellen Anforderungen eingehen, die an die einzelnen Bestandteile des Korpus gestellt werden. Die Dichtzonen müssen in der Lage sein, die eingeschobenen Rohrenden zuverlässig abzudichten. Hierzu müssen die Dichtzonen eine gewisse Elastizität oder Nachgiebigkeit aufweisen. Die Tragzone hingegen muss nicht oder nicht in dem Mass elastisch sein. Ihre Hauptfunktion besteht im Grunde darin, die beiden Dichtzonen zu verbinden und in Position zu halten. Für die Tragzone kann man daher ein Material verwenden, was weniger elastisch, dafür aber leichter ist. Auf diese Weise kann man Gewicht bei der Dichtmuffe einsparen. Da ein Übergang zwischen der Tragzone und mindestens einer Dichtzone unter einem Winkel < 90° zur Umfangswand verläuft, von der der Übergang ausgeht, kann man einerseits die Materialdicke in radialer Richtung relativ klein halten. Andererseits wird die Verbindungslänge zwischen der Tragzone und der Dichtzone ausreichend lang. Wenn beispielsweise der Übergang unter einem Winkel von 45 verläuft, dann hat man eine um 40 % längere Verbindungsstrecke zwischen der Tragzone und der Dichtzone, was sich günstig auf die Belastbarkeit der Dichtmuffe auswirkt.

Vorzugsweise sind das erste Material und das zweite Material jeweils als Kunststoff ausgebildet. Man kann die beiden Kunststoffe dann auf ihre Aufgaben hin auswählen, so dass man beispielsweise die Dichtzonen elastisch genug und die Tragzone belastbar genug ausbilden kann.

Hierbei ist bevorzugt, dass das erste Material ein Polypropylen und das zweite Material ein thermoplastisches Elastomer ist. Polypropylen hat den Vorteil eines geringen Gewichts. Auch unter Entsorgungsgesichtspunkten ist Polypropylen günstiger als das bislang vielfach verwendete EPDM. Es kann beispielsweise photochemisch abbaubar ausgebildet sein, so dass die Entsorgung günstig wird. Der Anteil des zweiten Materials an der Masse der Dichtmuffe kann klein gehalten werden, so dass man hier weniger Rücksicht auf das Gewicht nehmen muss, sondern das zweite Material vor allem im Hinblick auf die Funktion der Abdichtung wählen kann. Thermoplastische Elastomere haben den Vorteil, dass sie einerseits die Gebrauchseigenschaften von Elastomeren und andererseits die Verarbeitungseigenschaften von Thermoplasten besitzen.

Von besonderem Vorteil ist das zweite Material als thermoplastisches Vulkanisat (TPV) ausgebildet. Ein thermoplastisches Vulkanisat verfügt über ähnliche funktionelle Leistungen und Eigenschaften wie konventionelle Produkte aus vulkanisiertem Kautschuk, sie können jedoch mit der Geschwindigkeit, Effizienz und Wirtschaftlichkeit von Thermoplasten verarbeitet werden. Sie sind auch leichter entsorgbar als klassische vulkanisierte Kautschuke.

Vorzugsweise ist der Korpus als 2-Komponenten-Spritzgussteil ausgebildet. Dies erleichtert die Herstellung. Man kann die Tragzone und die beiden Dichtzonen gleichzeitig oder nacheinander in einer Spritzgussform formen.

Vorzugsweise weist die Tragzone in mindestens einem Abschnitt eine radiale Dicke auf, die maximal 60% der geringsten radialen Dicke der Dichtzonen beträgt. Man kann die Tragzone also relativ schwach dimensionieren, weil sie im Grunde nur die Aufgabe hat, die beiden Dichtzonen relativ zueinander zu positionieren und in dieser Position zu halten. Durch die Verwendung einer in Radialrichtung dünnen Tragzone lässt sich Material und damit Gewicht einsparen.

Vorzugsweise weist die Tragzone an ihrem einer Dichtzone benachbarten axialen Ende eine Verdickung auf. Durch die Verdickung wird einerseits ein ausreichend langer Übergang zwischen der Tragzone und der Dichtzone geschaffen, so dass die Dichtzone mit ausreichender Festigkeit an der Tragzone festgehalten werden kann. Anmuß die Tragzone im übrigen nicht sehr dick ausgebildet werden, sondern sie kann vergleichsweise dünn gehalten werden. Die Verdickung ist im übrigen einstückig mit einem Verbindungsbereich der Tragzone ausgebildet, so daß hier eine ausreichende Festigkeit gegeben ist.

Die Tragzone weist einen mittigen, radial nach innen gerichteten Vorsprung auf, der zwei parallele axiale Stirnseiten aufweist, die sich an ihren radial äußeren Enden in divergierenden Flächen fortsetzen. Der Vorsprung wird verwendet, um die beiden Rohre, die mit dem Rohrverbinder verbunden werden sollen, zu trennen. Die Rohre stoßen mit ihren Stirnseiten an die parallelen axialen Stirnseiten des Vorsprungs. Damit werden gleichzeitig die Positionen der Dichtlippen in einem gewissen Abstand von den Stirnseiten der Rohrenden festgelegt. Die divergierenden Flächen sorgen dafür, daß der Übergang zwischen dem Vorsprung und dem Rest der Tragzone eine ausreichende Stabilität aufweist, auch wenn die Tragzone im übrigen nur eine relativ geringe Materialstärke aufweist.

Vorzugsweise steht jede Fläche unter einem Winkel im Bereich von 30° bis 60° zu ihrer Stirnseite. Damit wird eine ausreichende Verdickung im Bereich des Übergangs vom Vorsprung zum Rest der Tragzone sichergestellt.

Vorzugsweise weist die Fläche eine radiale Erstreckung von maximal 75% der radialen Erstreckung der Stirnseite auf. Damit ist sichergestellt, daß der Vorsprung eine ausreichende Anlagelänge für die Stirnseiten der zu verbindenden Rohre aufweist. Andererseits erstreckt sich der Übergang zwischen dem Vorsprung und dem Rest der Tragzone über eine vergleichsweise kurze radiale Länge, so daß nicht unnötig Raum verschenkt wird.

Der Vorsprung weist eine Ausnehmung auf, die von seiner radialen Außenseite her ausgeht. Diese Ausnehmung hat zwei Vorteile. Zum einen wird Material eingespart, was wiederum zu einer Gewichtseinsparung führt. Zum anderen wird die Elastizität der Tragzone in dem Bereich vergrößert, in dem die beiden Rohrenden sozusagen zusammenstoßen. Die Dichtmuffe wird dadurch stärker belastbar.

Vorzugsweise ist die Ausnehmung umlaufend ausgebildet. Damit ergeben sich in allen Umfangsrichtungen die gleichen Verhältnisse.

Vorzugsweise geht die Ausnehmung mit einem gekrümmten Übergangsabschnitt in die radiale Außenseite der Tragzone über. Damit werden Belastungen durch Kanten oder Spitzen klein gehalten.

Die Erfindung wird im folgenden anhand von bevorzugten Ausführungsbeispielen in Verbindung mit der Zeichnung beschrieben. Hierin zeigen:
- Fig. 1: eine nicht erfindungsgemäße Dichtmuffe in perspektivischer Ansicht,
- Fig. 2: einen Schnitt A-A nach Fig. 1 in einer ersten nicht erfindungsgemäßen Ausgestaltung und
- Fig. 3: eine Ansicht nach Fig. 2 in einer zweiten erfindungsgemäßen Ausgestaltung.

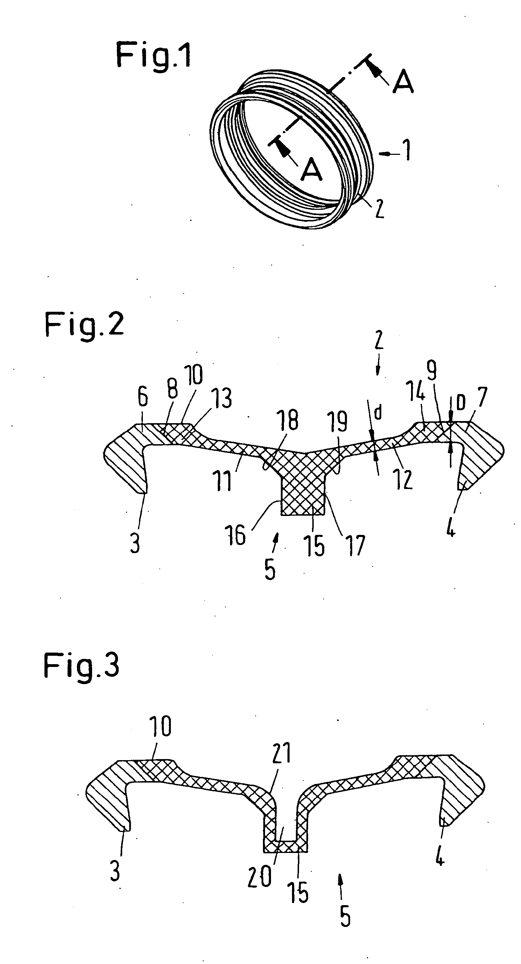

Eine Dichtmuffe 1 für einen nicht näher dargestellten Rohrverbinder weist einen in Fig. 2 im Querschnitt dargestellten Korpus 2 auf, der umlaufend ausgebildet ist.

Der Korpus 2 weist an seinen axialen Enden jeweils eine Dichtlippe 3, 4 auf, die sich radial einwärts erstrekken. Die Dichtlippen 3, 4 liegen in montiertem Zustand an der Umfangsfläche von zwei Rohrenden an, die durch die Dichtmuffe 1 überbrückt sind. Durch eine nicht näher dargestellte Schelle werden die Dichtlippen 3, 4 noch zusätzlich auf den Umfang der Rohrenden gedrückt.

Der Korpus 2 weist eine Tragzone 5 auf, die aus einem ersten Material aus Kunststoff gebildet ist. Die Tragzone 5 ist in Fig. 2 kreuzschraffiert dargestellt. Als Kunststoff läßt sich beispielsweise Polypropylen (PP) verwenden, das ein vergleichsweise geringes Gewicht hat.

An den beiden axialen Enden der Tragzone 5 ist jeweils eine Dichtzone 6, 7 angeordnet, die jeweils die Dichtlippe 3, 4 trägt. Die Dichtzonen 6, 7 sind aus einem zweiten Material gebildet, das ebenfalls ein Kunststoff ist, nämlich vorzugsweise ein thermoplastisches Elastomer (TPE) und besonders bevorzugt ein thermoplastisches Vulkanisat (TPV). Ein thermoplastisches Elastomer weist zwar ein größeres spezifisches Gewicht als Polypropylen auf, kann dafür aber eine Dichtaufgabe wesentlich besser wahrnehmen.

Die Tragzone 5 und die beiden Dichtzonen 6, 7 stoßen jeweils in einem Übergang 8, 9 aneinander an und sind dort miteinander verbunden. Die Übergänge 8, 9 stehen unter einem Winkel von etwa 45° zur radialen Außenseite 10 des Korpus 2. Dadurch wird die wirksame Länge der Übergänge 8, 9 um etwa 40% gegenüber einer Länge vergrößert, die sich ergeben würde, wenn die Übergänge 8, 9 unter einem rechten Winkel zur Außenseite 10 verlaufen würden.

Der Korpus 2 ist als 2K-Element ausgebildet, also als 2-Komponenten-Bauteil, wobei die beiden Komponenten gemeinsam oder nacheinander in der gleichen Form gespritzt werden können. Beim Spritzen ergibt sich eine ausreichend stabile Verbindung zwischen der Tragzone 5 und den beiden Dichtzonen 6, 7.

Um eine ausreichend belastbare Verbindung zwischen der Tragzone 5 und den beiden Dichtzonen 6, 7 herstellen zu können, weist der Korpus 2 im Bereich der Übergänge 8, 9 eine Dicke D auf. Die Tragzone 5 weist an zwei Tragarmen 11, 12 jeweils eine wesentlich geringere Dicke d auf, wobei diese radiale Dicke der Tragzone 5 maximal 60% der geringsten radialen Dicke D der Dichtzone 6, 7 beträgt. Die Dicke d der Tragzone 5 kann in der Größenordnung von etwa 1 mm liegen. Um den Übergang zwischen den Tragarmen 11, 12 und den Dichtzonen 6, 7 auf einfache Weise zu ermöglichen, weisen die Tragarme 11, 12 an ihren axialen Enden jeweils eine Verdickung 13, 14 auf.

Etwa in der Mitte weist die Tragzone 5 einen radial nach innen gerichteten Vorsprung 15 auf, der zwei im wesentlichen parallele axiale Stirnseiten 16, 17 aufweist. Die beiden Stirnseiten 16, 17 des Vorsprungs 15 dienen als Anschlag für die Rohrenden, die in die Dichtmuffe 1 eingeschoben werden. Der Vorsprung 15 erstreckt sich radial weiter nach innen als die Dichtlippen 3, 4.

Am radial äußeren Ende gehen die Stirnseiten 16, 17 über in Flächen 18, 19, die divergieren, also sich voneinander in axialer Richtung entfernen. Der Winkel, unter dem die Flächen 18, 19 zu den Stirnseiten 16, 17 stehen, liegt im Bereich von 30° bis 60°, vorzugsweise bei etwa 45°. Dadurch wird zwischen dem Vorsprung 15 und den Tragarmen 11, 12 ein ausreichend stabiler Übergang geschaffen, so daß die Tragzone 5 mechanisch in ausreichendem Maße belastbar ist.

Die Flächen 18, 19 haben in radialer Richtung eine Erstreckung, die maximal 75% der radialen Erstreckung der Stirnseiten 16, 17 beträgt. Man verwendet also nicht allzuviel Bauraum auf die Verstärkung der Tragzone beim Übergang zwischen dem Vorsprung 15 und den Tragarmen 11, 12.

Die Tragarme 11, 12 sind gegenüber der Axialrichtung etwas nach außen geneigt, beispielsweise im Bereich von 5 bis 20°. Dadurch kann die Tragzone 5 in Axialrichtung in geringem Umfang elastisch nachgeben.

Fig. 3 zeigt eine abgewandelte erfindungsgemäße Ausgestaltung, die weitgehend der der Fig. 2 entspricht. Gleiche Elemente sind daher mit den gleichen Bezugszeichen versehen.

Modifiziert wurde hier der Vorsprung 15. Der Vorsprung 15 bei der Ausgestaltung nach Fig. 3 weist eine mittige Ausnehmung 20 auf, die in Umfangsrichtung umlaufend durchgehend ausgebildet ist. Die Ausnehmung 20 geht über gekrümmte Übergangsabschnitte 21 in die Außenseite 10 über. Durch die Ausnehmung 20 kann man den Übergangsabschnitt 5 mit einer weiter reduzierten Masse ausbilden, so daß die Dichtmuffe 1 leichter bauen kann.

Darüber hinaus hat die Ausnehmung 20 den Vorteil, daß die Dichtmuffe 1 in dem Bereich, wo sich die beiden abzudichtenden Rohrenden gegenüberstehen, leichter elastisch verformen kann, so daß die Dichtmuffe 1 in der Lage ist, Belastungen, die in Axialrichtung auftreten, aufzunehmen.

## Patentansprüche

1. Dichtmuffe für einen Rohrverbinder mit einem umlaufenden Korpus (2), der an seinen axialen Enden jeweils mindestens eine radial nach innen gerichtete Dichtlippe (3, 4) aufweist, die auf den Umfang eines Rohres spannbar ist, wobei der Korpus (2) eine Tragzone (5) aus einem ersten Material und zwei jeweils eine Dichtlippe (3, 4) aufweisende Dichtzonen (6, 7) aus einem zweiten Material aufweist, wobei sich das erste Material und das zweite Material voneinander unterscheiden, wobei die Dichtzonen (6, 7) an axialen Enden der Tragzone (5) angeordnet sind und ein Übergang (8, 9) zwischen der Tragzone (5) und mindestens einer Dichtzone (6, 7) unter einem Winkel < 90° zur Umfangswand (10) verläuft, von der der Übergang (8, 9) ausgeht, **dadurch gekennzeichnet, daß** die Tragzone (5) einen mittigen, radial nach innen gerichteten Vorsprung (15) aufweist, der zwei parallele axiale Stirnseiten (16, 17) aufweist, die sich an ihren radial äußeren Enden in divergierenden Flächen (18, 19) fortsetzen, wobei der Vorsprung (15) eine Ausnehmung (20) aufweist, die von seiner radialen Außenseite her ausgeht.

2. Dichtmuffe nach Anspruch 1, **dadurch gekennzeichnet, daß** das erste Material und das zweite Material jeweils als Kunststoff ausgebildet sind.

3. Dichtmuffe nach Anspruch 1 oder 2, **dadurch gekennzeichnet, daß** das erste Material ein Polypropylen und das zweite Material ein thermoplastisches Elastomer ist.

4. Dichtmuffe nach Anspruch 3, **dadurch gekennzeichnet, daß** das zweite Material als thermoplastisches Vulkanisat ausgebildet ist.

5. Dichtmuffe nach einem der Ansprüche 1 bis 4, **dadurch gekennzeichnet, daß** der Korpus (2) als 2-Komponenten-Spritzgußteil ausgebildet ist.

6. Dichtmuffe nach einem der Ansprüche 1 bis 5, **dadurch gekennzeichnet, daß** die Tragzone (5) in mindestens einem Abschnitt (11, 12) eine radiale Dikke (d) aufweist, die maximal 60% der geringsten radialen Dicke (D) der Dichtzonen (6, 7) beträgt.

7. Dichtmuffe nach Anspruch 6, **dadurch gekennzeichnet, daß** die Tragzone (5) an ihrem einer Dichtzone (6, 7) benachbarten axialen Ende eine Verdickung (13, 14) aufweist.

8. Dichtmuffe nach einem der Ansprüche 1 bis 7, **dadurch gekennzeichnet, daß** jede Fläche (18, 19) unter einem Winkel im Bereich von 30° bis 60° zu ihrer Stirnseite (16, 17) steht.

9. Dichtmuffe nach einem der Ansprüche 1 bis 8, **dadurch gekennzeichnet, daß** die Fläche (18, 19) eine radiale Erstreckung von maximal 75% der radialen Erstrekkung der Stirnseite (16, 17) aufweist.

10. Dichtmuffe nach einem der Ansprüche 1 bis 9, **dadurch gekennzeichnet, daß** die Ausnehmung (20) umlaufend ausgebildet ist.

11. Dichtmuffe nach einem der Ansprüche 1 bis 10, **dadurch gekennzeichnet, daß** die Ausnehmung (20) mit einem gekrümmten Übergangsabschnitt (21) in die radiale Außenseite (10) der Tragzone (5) übergeht.

## Claims

1. Sealing sleeve for a pipe connector, comprising a circumferential body (2) which comprises at each of the axial ends thereof at least one radially inwardly directed sealing lip (3, 4), which can be stretched over the circumference of a pipe, the body (2) comprising a support region (5) made of a first material and two sealing regions (6, 7) made of a second material and each comprising a sealing lip (3, 4), the first material and the second material being different from one another, the sealing regions (6, 7) being arranged at axial ends of the support region (5) and a transition (8, 9) between the support region (5) and at least one sealing region (6, 7) extending at an angle of < 90° to the circumferential wall (10) from which the transition (8, 9) starts, **characterised in that** the support region (5) comprises a central, radially inwardly directed projection (15), which comprises two parallel axial end faces (16, 17) which continue at the radially outermost ends thereof as diverging surfaces (18, 19), the projection (15) comprising a recess (20) which starts from the radially outermost side thereof.

2. Sealing sleeve according to claim 1, **characterised in that** the first material and the second material are both formed as plastics material.

3. Sealing sleeve according to either claim 1 or claim 2, **characterised in that** the first material is a polypropylene and the second material is a thermoplastic elastomer.

4. Sealing sleeve according to claim 3, **characterised in that** the second material is formed as a thermoplastic vulcanised material.

5. Sealing sleeve according to any one of claims 1 to 4, **characterised in that** the body (2) is formed as a 2-component injection-moulded part.

6. Sealing sleeve according to any one of claims 1 to 5, **characterised in that** the support region (5) has in at least one portion (11, 12) a radial thickness (d) which is at most 60 % of the smallest radial thickness (D) of the sealing regions (6, 7).

7. Sealing sleeve according to claim 6, **characterised in that** the support region (5) has an enlargement (13, 14) at the axial end thereof adjacent to a sealing region (6, 7).

8. Sealing sleeve according to any one of claims 1 to 7, **characterised in that** each surface (18, 19) is at an angle in the range of 30° to 60° to the end face (16, 17) thereof.

9. Sealing sleeve according to any one of claims 1 to 8, **characterised in that** the surface (18, 19) has a radial extension of at most 75 % of the radial extension of the end face (16, 17).

10. Sealing sleeve according to any one of claims 1 to 9, **characterised in that** the recess (20) is formed circumferentially.

11. Sealing sleeve according to any one of claims 1 to 10, **characterised in that** a curved transition portion (21) of the recess (20) transitions into the radially outermost side (10) of the support region (5).

## Revendications

1. Manchon d'étanchéité pour un raccord de tuyau avec un corps circonférentiel (2), qui présente au niveau de ses extrémités axiales respectivement au moins une lèvre d'étanchéité (3, 4) dirigée radialement vers l'intérieur, laquelle peut être serrée sur la circonférence d'un tuyau, le corps (2) présentant une zone support (5) en un premier matériau et deux zones d'étanchéité (6, 7) présentant chacune une lèvre d'étanchéité (3, 4) en un deuxième matériau, le premier matériau et le deuxième matériau étant différents l'un de l'autre, les zones d'étanchéité (6, 7) étant agencées au niveau des extrémités axiales de la zone support (5) et une transition (8, 9) entre la zone support (5) et au moins une zone d'étanchéité (6, 7) s'étend selon un angle < 90° par rapport à la paroi circonférentielle (10), de laquelle part la transition (8, 9), **caractérisé en ce que** la zone support (5) comporte une saillie (15) médiane, dirigée radialement vers l'intérieur qui présente deux faces frontales (16, 17) axiales parallèles, qui se poursuivent au niveau de leurs extrémités radialement extérieures par des surfaces divergentes (18, 19), la saillie (15) présentant un évidement (20) partant de son côté extérieur radial.

2. Manchon d'étanchéité selon la revendication 1, **caractérisé en ce que** le premier matériau et le deuxième matériau sont réalisés respectivement en plastique.

3. Manchon d'étanchéité selon la revendication 1 ou 2, **caractérisé en ce que** le premier matériau est un polypropylène et le deuxième matériau est un élastomère thermoplastique.

4. Manchon d'étanchéité selon la revendication 3, **caractérisé en ce que** le deuxième matériau est réalisé sous forme de vulcanisat thermoplastique.

5. Manchon d'étanchéité selon l'une quelconque des revendications 1 à 4, **caractérisé en ce que** le corps (2) est réalisé sous forme de pièce moulée par injection à deux composants.

6. Manchon d'étanchéité selon l'une quelconque des revendications 1 à 5, **caractérisé en ce que** la zone support (5) présente dans au moins une section (11, 12), une épaisseur radiale (d) qui est au maximum égale à 60 % de l'épaisseur radiale (D) la plus faible des zones d'étanchéité (6, 7).

7. Manchon d'étanchéité selon la revendication 6, **caractérisé en ce que** la zone support (5) présente un épaississement (13, 14) au niveau de son extrémité axiale adjacente à une zone d'étanchéité (6, 7).

8. Manchon d'étanchéité selon l'une quelconque des revendications 1 à 7, **caractérisé en ce que** chaque surface (18, 19) se trouve à un angle situé dans la plage allant de 30° à 60° par rapport à sa face frontale (16, 17).

9. Manchon d'étanchéité selon l'une quelconque des revendications 1 à 8, **caractérisé en ce que** la surface (18, 19) présente une extension radiale correspondant au maximum à 75 % de l'extension radiale de la face frontale (16, 17).

10. Manchon d'étanchéité selon l'une quelconque des revendications 1 à 9, **caractérisé en ce que** l'évidement (20) est réalisé de manière circonférentielle.

11. Manchon d'étanchéité selon l'une quelconque des revendications 1 à 10, **caractérisé en ce que** l'évidement (20) se poursuit avec une section de transition courbe (21) par le côté extérieur radial (10) de la zone support (5).
